# EUROPÄISCHE PATENTSCHRIFT

(11) **EP 0 974 404 B1**
(45) Veröffentlichungstag und Bekanntmachung des Hinweises auf die Patenterteilung: **24.08.2005**
(21) Anmeldenummer: 99112166.6
(22) Anmeldetag: 24.06.1999
(51) Int. Cl.: B05D 5/08, A47J 36/02

(54) **Gegenstand mit einer Pigment, Fluorpolymer und Bindeharz enthaltenden Beschichtung, Verfahren zu dessen Herstellung und dessen Verwendung**
Article with a coating containing a pigment, a fluoropolymer and a binding resin , process for manufacturing it and use
Article avec un revêtement contenant un pigment, un polymère fluoré et une résine liante, procédé pour sa fabrication et son utilisation

(30) Priorität: 24.07.1998 DE 19833375
(43) Veröffentlichungstag der Anmeldung: 26.01.2000
(73) Patentinhaber: Weilburger Coatings GmbH, 35781 Weilburg (DE)
(72) Erfinder: Herber, Jürgen, Dr., 35394 Giessen (DE)
(74) Vertreter: Weber, Dieter

(56) Entgegenhaltungen:
- EP-A- 0 252 669
- WO-A-96/13556
- WO-A-97/39073
- DE-A- 19 732 945
- US-A- 4 605 695
- US-A- 5 576 381

## Beschreibung

Die Erfindung betrifft wenigstens zum Teil aus Metall, Keramik, Email oder Glas bestehende Gegenstände mit einer wenigstens einlagigen, wenigstens einen Teil des Gegenstandes bedeckenden Beschichtung, die anorganisches und/oder organisches Pigment, Fluorpolymer und als Bindeharz wenigstens eines vom Typ der Polyamidimide, Polyimide, Polyetherimide, Polyethersulfone, Polyphenylensulfide, Polyetherketone, Siliconharze oder eine Mischung wenigstens zweier derselben enthält, wobei das Gewichtsverhältnis des gesamten Bindeharzes zu dem gesamten Fluorpolymeren in der direkt mit der Oberfläche des Gegenstandes in Kontakt stehenden Schicht 1,5 : 1 bis 1 : 3 beträgt. Solche Gegenstände mit einer reibungsvermindernden, antiadhäsiven und schmutzabweisenden Beschichtung werden in erster Linie als Koch-, Back- und Bratgeräte verwendet.

Heutige Antihaftbeschichtungen für Koch-, Back- und Bratzwecke basieren im Prinzip auf der EP-A-0 022 257, die einen mehrschichtigen Aufbau mit einer Grundschicht beschreibt, die in direktem Kontakt mit der zu beschichtenden aufgerauhten Oberfläche steht und eine Mischung aus einem organischen Bindeharz, einem Fluorpolymeren, Pigmenten, Glimmern und Lackadditiven ist.

Da bei solchen Antihaftbeschichtungen Korrosionserscheinungen beobachtet wurden, richtete sich ein Augenmerk auf eine Verbesserung des Korrosionsschutzes. Hierzu verwendet die EP-A-0 056 280 als Fluorpolymer eine Mischung aus einem nicht aus der Schmelze verarbeitbaren Polytetrafluorethylen mit thermoplastischen Tetrafluorethylencopolymeren, wie Tetrafluorethylen/Perfluoralkylvinylether-Copolymer oder Tetrafluorethylen/Hexafluorpropylen-Copolymer. Diese Fluorpolymermischungen ergeben eine bessere Substrathaftung und damit eine längere Gebrauchsdauer nach korrosionsfördernder Belastung.

Die EP-A-0 254 269 beschreibt Antihaftbeschichtungen, in denen PTFE mit bestimmten Molmassen eingesetzt wird und die ferner keramische Füllstoffe zur Verbesserung der mechanischen Eigenschaften enthalten. Die WO 91/02 773 beschreibt einen Schichtaufbau, bei dem die Grundschicht fluorpolymerfrei ist und nur Bindeharz und gegebenenfalls Pigmente enthält, während die nachfolgenden Schichten fluorpolymerhaltig sind. Ein solcher Schichtenaufbau erfordert hohe Vortrocknungstemperaturen der Grundschicht und ergibt eine unzureichende Zwischenhaftung der Grundschicht zu der nachfolgenden fluorpolymerhaltigen Schicht. Spätere Veröffentlichungen, wie die WO 92/10 309, die EP-A- 0 561 981, die US-A-5 250 356 und die WO 94/05 494 beschreiben Schichtaufbauten mit Fluorpolymer in der Grundschicht, aber mit einem Konzentrationsgradienten des Fluorpolymers unter Steigerung von dessen Gehalt von der Grundschicht zur Deckschicht. Die EP-A-0 607 934 und die EP-A-0 659 853 versuchen, die Substrathaftung durch Auswahl bestimmter Bindeharze zu verbessern.

Die WO 96/13 556 schlägt zur Verbesserung der Substrathaftung auf metallischen, glasartigen oder keramischen Substraten Grundschichten vor, die silikatische oder oxidische Füllstoffe, wie kolloidale Kieselsäure, enthalten. Das Gewichtsverhältnis von Fluorpolymer zu Bindeharz soll dabei 1 : 2 bis 2 : 1 betragen. Die anorganischen Füllstoffe sollen einen Durchmesser von wenigstens 1 µm haben.

Die WO 97/01 599 beschreibt eine Antihaftbeschichtung, zu deren Herstellung anorganische, mindestens teilfluorierte Vorläufer eines späteren Härtebildners mit Teilchengrößen kleiner als 75 nm zugesetzt werden. Dabei werden fluorierte organische Lösemittel verwendet. Die Systeme können nicht auf wäßrige Systeme übertragen werden.

Soweit die beschriebenen Beschichtungen überhaupt anorganische und/oder organische Pigmente enthalten, finden sich in den Veröffentlichungen keine Angaben über Teilchengrößen, jedenfalls keine Abhängigkeiten der Teilchengrößen der Pigmente einerseits und der Fluorpolymerteilchen andererseits.

Die der Erfindung zugrundeliegende Aufgabe bestand darin, Gegenstände mit Antihaftbeschichtungen mit erhöhter Korrosionsbeständigkeit und möglichst erhöhter mechanischer Belastbarkeit zu bekommen. Diese Aufgabe wird überraschenderweise bei Gegenständen mit den eingangs genannten Merkmalen durch die nachfolgend aufgeführten erfinderischen Merkmale gelöst.

Die Gegenstände nach der Erfindung sind dadurch gekennzeichnet, daß die Gesamtbeschichtung, bezogen auf das gesamte enthaltene Fluorpolymer, 0,05 bis 25 Gew.% anorganisches und/oder von den Bindeharzen und Fluorpolymeren verschiedenes organisches Pigment enthält, wobei wenigstens 10 Gew.% des gesamten in der Beschichtung enthaltenen Pigments Primärteilchengrößen aufweisen, die im Bereich von 2,5 bis 50 % des Durchmessers der größten enthaltenen Fluorpolymerteilchen mit dem höchsten Gewichtsanteil liegen, und wenigstens 10 Gew.% des gesamten in der Beschichtung enthaltenen Pigments Primärteilchengrößen aufweisen, deren Durchmesser dem ein- bis fünffachen Durchmesser der größten enthaltenen Fluorpolymerteilchen mit dem höchsten Gewichtsanteil entsprechen.

Im Stand der Technik wurde beobachtet, daß insbesondere bei Beschichtungen auf Substraten mit geringer Rauhtiefe (<1 µm) jeder Oberflächendefekt, insbesondere durch Blasenbildung infolge unzureichenden Korrosionsschutzes, zu einer schnellen Verletzung der Beschichtung führt. Dies wird insbesondere bei mechanischer Belastung etwa bei Koch- und Bratgeräten, die durch den Rührvorgang mechanischer Beanspruchung unterliegen, beobachtet.

Überraschenderweise wurde nun gefunden, daß durch das erfinderische Konzept mit gezielter Einstellung der Teilchengrößen und Anwendung bestimmter Bemessungsregeln die Korrosionsbeständigkeit der Beschichtung sprunghaft erhöht wird, so daß gegenüber dem Stand der Technik eine vielfach längere Lebensdauer der Antihaftbeschichtung erzielt wird, die noch dazu keine aufwendigen und umweltbelastenden Substratvorbehandlungen voraussetzt. Man hätte erwarten können, daß das Zumischen von Pigmenten die Substrathaftung gegenüber ungefüllten Mischungen von Bindeharz und Fluorpolymer verschlechtert, so daß die erhöhte Substrathaftung, mechanische Belastbarkeit und Korrosionsbeständigkeit der erfindungsgemäßen Antihaftbeschichtungen äußerst überraschend ist.

Die erfindungsgemäß einzusetzenden organischen Bindeharze sind solche, die in direktem Lebensmittelkontakt bis 250 °C beständig sind und als teilchenförmiger Feststoff oder in Lösung in die Ausgangsmischung für die Beschichtung eingebracht werden und eine Schmelze bilden können. Pigmente im Sinne der Erfindung sind teilchenförmige Stoffe, die in der für die Gewinnung der Beschichtung verwendeten Ausgangsmischung nicht löslich sind und durch den Herstellungsprozeß zumindest zum Teil ihre Primärteilchengröße zurückgewinnen, weswegen als Kriterium für die erfindungsgemäße Bemessungsregel die Primärteilchengrößen der Pigmente herangezogen werden, d. h. die Teilchengrößen der Pigmente vor bzw. bei der Zugabe zu der Beschichtungsmischung.

Die Pigmente können bei der Herstellung der Beschichtungen in einfacher Weise in wäßrigen oder lösemittelhaltigen Dispersionen zu wäßrigen oder lösemittelhaltigen Fluorpolymerdispersionen zugemischt und gleichmäßig vermengt werden. Bei der Weiterverarbeitung werden diese Gemische getrocknet, wobei sich die entstehenden Komposite nicht mehr trennen. Diese Methode setzt im Gegensatz zum Stand der Technik keine gemeinsame Lösung von Fluorpolymer und Pigmentevorläufer voraus und benötigt auch keine teuren perfluorierten Lösemittel. Zusätzlich zu den erfindungsgemäßen Pigmenten mit den angegebenen Größenbereichen können auch bekannte laminare Barrierepigmente zugegeben werden, die die Beschichtung zusätzlich verfestigen. Solche laminaren Füllstoffe, die in ihrer längsten Ausdehnung wenigstens 5 µm haben, beeinflussen die erfindungsgemäßen Beschichtungen nicht negativ. Sie können jedoch ihrerseits die Gleiteigenschaften einer solchen Beschichtung zusätzlich verbessern. Ihr Anteil liegt jedoch vorzugsweise nicht über 8 Gew.% des Gesamtgewichtes des Fluorpolymeren in der betreffenden Schicht.

Eine mögliche Erklärung für den überraschenden technischen Effekt der Korrosionsschutzsteigerung nach der Erfindung ist die, daß sich die kleinen Pigmentteilchen im Bereich von 2,5 bis 50 % des Durchmessers der größten enthaltenen Fluorpolymerteilchen mit dem höchsten Gewichtsanteil in die Kugelzwischenräume der dichtesten Kugelpackung der Fluorpolymerteilchen einlagern und diese Kugelzwischenräume wenigstens teilweise besetzen, so daß die Packungsdichte erhöht wird, ohne die antiadhäsiven Eigenschaften der Schicht zu beeinträchtigen, da sich aufgrund der Größe der die Zwischenräume auffüllenden Teilchen diese vorwiegend im Inneren der gebildeten Kugelpackung befinden. Durch erhöhte Packungsdichte läßt sich die Korrosionsschutzverbesserung der Schicht erklären, da die Mikroporosität, insbesondere bei nicht aus der Schmelze verarbeitbaren Fluorpolymeren, gesenkt wird und die Kanäle, durch die aggressive Agentien zum Substrat vordringen können, stark verkleinert werden. Die Auffüllung der Kugelzwischenräume insbesondere mit anorganischen Pigmenten, die im Vergleich mit den Fluorpolymeren eine wesentlich höhere Härte aufweisen, fördert auch die mechanische Belastbarkeit, z. B. Abriebbeständigkeit, ohne die antiadhäsiven Eigenschaften zu vermindern und die Substrathaftung zu beeinträchtigen. So ist erfindungsgemäß die Verwendung anorganischer Pigmente bevorzugt, obwohl für bestimmte Anwendungen auch organische Pigmente eingesetzt werden können, bei denen es sich um teilchenförmige organische Stoffe handelt, die in den verwendeten Mischungen nicht löslich sind und sich von den verwendeten Bindeharzen und Fluorpolymeren unterscheiden. Derzeit nicht erklärbar ist, aus welchem Grund die Korrosionsbeständigkeit und Substrathaftung weiter gesteigert wird, wenn zusätzlich zu den kleinen Pigmentteilchen große Pigmentteilchen eingelagert werden, deren Durchmesser dem ein- bis fünffachen Durchmesser der größten enthaltenen Fluorpolymerteilchen mit dem höchsten Gewichtsanteil entsprechen, da diese Pigmentteilchen für die Einlagerung in die Kugelzwischenräume zu groß sind.

Die erfindungsgemäße Beschichtung kann ein- oder mehrlagig sein. Bevorzugt ist die Beschichtung zwei- oder dreilagig, wobei der Anteil an organischem Bindeharz von der Grundschicht zur Deckschicht abnimmt und letztere gegebenenfalls frei von Bindeharz sein kann. Das oben angegebene Gewichtsverhältnis von Bindeharz zu Fluorpolymer bezieht sich somit immer nur auf die direkt mit der Oberfläche des Gegenstandes in Kontakt stehende Schicht, und diese ist bei mehrlagigen Beschichtungen die Grundschicht, bei einlagigen Beschichtungen die Gesamtschicht.

In den erfindungsgemäßen Beschichtungen können ein oder mehrere Fluorpolymere verwendet werden, die eine einzige Teilchengrößenverteilung etwa in der Form einer Gauß'schen Kurve haben und die als monomodal bezeichnet werden. Der Durchmesser der größten enthaltenen Fluorpolymerteilchen mit dem höchsten Gewichtsanteil entspricht dann dem Durchmesser der Fluorpolymerteilchen beim Maximum der Gauß'schen Kurve, da Fluorpolymerteilchen mit diesem Durchmesser den höchsten Gewichtsanteil in der Mischung haben.

Bevorzugt verwendet man jedoch in den erfindungsgemäßen Beschichtungen bimodale oder multimodale Fluorpolymere mit wenigstens zwei unterschiedlichen Teilchengrößenverteilungen, von denen beispielsweise die eine ein Maximum von 240 nm und die andere ein Maximum von 100 nm hat. In diesem Fall entsprechen die größten enthaltenen Fluorpolymerteilchen mit dem höchsten Gewichtsanteil dem Maximum der oberen Teilchengrößenverteilung, d. h. 240 nm. Bei diesem Zahlenbeispiel sollen also erfindungsgemäß wenigstens 10 Gew. % des enthaltenen Pigmentes Primärteilchengrößen im Bereich von 240 bis 1200 nm haben.

Es ist bevorzugt, als Fluorpolymere eine Mischung zu verwenden, die aus einem nicht aus der Schmelze verarbeitbaren Polytetrafluorethylentyp und einem thermoplastischen Tetrafluorethylencopolymeren besteht. Zweckmäßig liegt der Gewichtsanteil des thermoplastischen Fluorpolymers bei maximal 20, vorzugsweise maximal 15 Gew.% des nicht aus der Schmelze verarbeitbaren Fluorpolymers. Der mittlere Primärteilchendurchmesser des thermoplastischen Copolymeren liegt vorzugsweise bei höchstens 50 %, vorzugsweise höchstens 42 % des mittleren Primärteilchendurchmessers des nichtschmelzbaren Fluorpolymeren. Das nichtschmelzbare Fluorpolymer ist zweckmäßig Tetrafluroethylenhomopolymer, ein mit Hexafluorpropylen oder Perfluoralkylether modifiziertes Polytetrafluorethylen und kann aus qualitativ oder quantitativ inhomogenen Partikeln bestehen. Das thermoplastische Fluorpolymer ist zweckmäßig ein Copolymer aus Perfluoralkylvinylether und Tetrafluorethylen und/oder aus Hexafluorpropylen und Tetrafluorethylen.

Wenn die erfindungsgemäße Beschichtung zweilagig ist, enthält die zweite oder Deckschicht zweckmäßig 0 bis 30 Gew.% Bindeharz, bezogen auf die Gesamtmenge an Fluorpolymer. Im Falle zwei- oder mehrlagiger Beschichtungen enthält die Deckschicht oder oberste Schicht bevorzugt kein Bindeharz.

Bei den erfindungsgemäßen Beschichtungen kann ein Teil der Kugelzwischenräume der dichtesten Kugelpackung, die von den größten eingesetzten Fluorpolymerteilchen gebildet wird, mit kleinen Fluorpolymerteilchen aufgefüllt werden. Der wesentliche Teil der Kugelzwischenräume oder diese insgesamt werden jedoch erfindungsgemäß von den Pigmenten kleiner Teilchengröße gefüllt.

Die eingesetzten Fluorpolymere können einen inhomogenen Aufbau des Polymerpartikels besitzen, indem sie aus einem Kern, gegebenenfalls einer chemisch anders aufgebauten inneren Hülle und mindestens einer wiederum anders aufgebauten äußeren Hülle bestehen. Solche imhomogenen Fluorpolymerteilchen werden in einer stufenweisen Polymerisation gewonnen. Verwendbar sind auch quantitativ inhomogene Teilchen, bei denen beispielsweise der Gehalt an Modifier sich in inneren Regionen des Teilchens von dem in äußeren Regionen unterscheidet. Bevorzugt eingesetzt werden diese Fluorpolymerteilchen in wäßriger Dispersion.

Das Gewichtsverhältnis des gesamten Bindeharzes zu den gesamten Fluorpolymeren in der direkt mit der Oberfläche des Gegenstandes in Kontakt stehenden Schicht liegt vorzugsweise im Bereich von 1 : 1 bis 1 : 2.

Als anorganische Pigmente nach der Erfindung kommen sehr unterschiedliche Stoffe in Betracht, die aber nicht zwangsläufig gleichwirkend sein müssen. Bevorzugte anorganische Pigmente nach der Erfindung sind Siliciumdioxid, Ruß, Titandioxid, Kobalt-Aluminium-Mischoxide vom Spinelltyp, Kobaltphosphat, ZnFe₂O₄, (Fe₂, Mn)₂O₃-Mischoxid, Cu(Cr,Fe)₂O₄, Fe₂O₃, Cr₂O₃, FeO, Aluminiumsilicat, calciniertes oder wasserhaltiges Aluminiumoxid, Talkum oder BaSO₄ sowie keramische Füllkörper entsprechender Größe. Die organischen Pigmente sind beispielsweise Farbpigmente, die sich in dem gewählten System nicht lösen.

Die kleineren Pigmentteilchen haben zweckmäßig einen Durchmesser im Bereich von 5 bis 42 % des Durchmessers der größten enthaltenen Fluorpolymerteilchen mit dem höchsten Gewichtsanteil, wobei besonders bevorzugt wenigstens 5 Gew.% der Primärteilchengrößen jeweils im Bereich von 39 bis 42 bzw. 20 bis 24 bzw. 9 bis 13 bzw. 5 bis 8 % des Durchmessers der größten enthaltenen Fluorpolymerteilchen mit dem höchsten Gewichtsanteil liegen.

Wie bereits eingangs erwähnt, werden die erfindungsgemäßen Gegenstände vorzugsweise als Koch-, Back- und Bratgeräte eingesetzt und sind hierfür gewöhnlich Pfannen, Töpfe, Kasserollen oder dergleichen.

Das erfindungsgemäße Verfahren zur Herstellung wenigstens zum Teil aus Metall, Keramik, Email oder Glas bestehender Gegenstände mit einer wenigstens einlagigen, wenigstens einen Teil des Gegenstandes bedeckenden Beschichtung, die anorganisches und/oder organisches Pigment, Fluorpolymer und als Bindeharz wenigstens ein Polyamidimid, Polyimid, Polyetherimid, Polyethersulfon, Polyphenylensulfid, Polyetheretherketon, Siliconharz oder eine Mischung wenigstens zweier derselben enthält, wobei das Gewichtsverhältnis des gesamten Bindeharzes zu dem gesamten Fluorpolymeren in der direkt mit der Oberfläche des Gegenstandes in Kontakt stehenden Schicht 1,5 : 1 bis 1 : 3 beträgt, ist dadurch gekennzeichnet, daß man in an sich bekannter Weise den Gegenstand wenigstens teilweise mit einer solchen Beschichtung versieht, in der, bezogen auf das gesamte enthaltene Fluorpolymer, 0,05 bis 25 Gew.% anorganisches und/oder von den Bindeharzen und den Fluorpolymeren verschiedenes organisches Pigment enthalten ist, wobei wenigstens 10 Gew. % des gesamten in der Beschichtung enthaltenen Pigments Primärteilchengrößen aufweisen, die im Bereich von 2,5 bis 50, vorzugsweise 5 bis 42 % des Durchmessers der größten enthaltenen Fluorpolymerteilchen mit dem höchsten Gewichtsanteil liegen, und wenigstens 10 Gew.% des gesamten in der Beschichtung enthaltenen Pigments Polymerteilchengrößen aufweisen, die im Durchmesser dem ein- bis fünffachen Durchmesser der größten enthaltenen Fluorpolymerteilchen mit dem höchsten Gewichtsanteil entsprechen. Das verwendete Pigment aus beiden Größenbereichen besteht vorzugsweise jeweils wenigstens aus 20 Gew.%, besonders bevorzugt jeweils wenigstens 30 Gew.%, des gesamten in der Beschichtung enthaltenen Pigmentes.

Mindestens zweilagige Beschichtungsaufbauten, die neben einer Grundschicht oder Primerschicht, die direkt auf dem Substrat aufgetragen wird, und einer Deckschicht, die den Beschichtungsabschluß bildet, sind bevorzugt. Sie können sowohl nach einer kurzen Ablüftphase des Primers zur Entfernung des enthaltenen Wassers, wie während 2 min bei 100 °C Umlufttemperatur, als auch naß in naß aufgetragen werden. Letzteres bedeutet, daß keine Zwischentrocknung der Primerschicht vor dem Auftragen der Deckschicht erfolgt, sondern daß die Deckschicht direkt auf die nasse Grundschicht aufgetragen wird. Diese Gesamtbeschichtung wird dann forciert getrocknet und mindestens 5 bis 15 min bei 120 bis 420 °C Objekttemperatur eingebrannt.

Ein erfindungsgemäßer einschichtiger Beschichtungsaufbau umfaßt Schichtstärken von 3 bis 18 µm in getrocknetem Zustand. Die Grundschicht eines mindestens zweilagigen Beschichtungsaufbaues ist zweckmäßig 6 bis 12 µm, die Deckschicht bei einem zweilagigen Aufbau 12 bis 20 µm dick, jeweils in getrocknetem Zustand. Bei dreilagigen Aufbauten sind die Grund- oder Primerschicht ebenfalls bevorzugt 6 bis 12 µm dick, die Mittelschicht bevorzugt 10 bis 15 µm dick und die Deckschicht bevorzugt 10 bis 15 µm dick, alles in getrocknetem Zustand. Die erfindungsgemäßen Beschichtungen können durch Spritzen, Gießen oder Rollen aufgetragen werden. Im Falle einer Applikation durch Gießen oder Rollen liegen die bevorzugten Schichtstärken für einen dreischichtigen Aufbau bei 4 bis 8 µm Primerschicht, 6 bis 12 µm Mittelschicht und 6 bis 12 µm Deckschicht, jeweils in getrocknetem Zustand. Die Trocknung der Gesamtbeschichtung erfolgt am Ende der Aufbringung aller Schichten zweckmäßig bei mindestens 380 °C.

Bevorzugt ist es außerdem, Gegenstände zu beschichten, deren zu beschichtende Oberfläche vor der Beschichtung eine mittlere Oberflächenrauhigkeit kleiner als 5 µm aufweist und frei von haftungsvermindernden Verunreinigungen ist.

Zweckmäßig enthält die verarbeitungsfertige Naßbeschichtung in Gewichtsprozenten 4,0 bis 18,0 Gew.% Bindeharz, 0,2 bis 4,0 Gew.% Entschäumer, 0,5 bis 7,0 Gew.% Verlaufsmittel, 0,6 bis 2,0 Gew.% Ruß, 0,4 bis 2,5 Gew.% SiO₂, 0 bis 5,2 Gew.% viskositätsmodifizierende, homogenisierende Mittel, 2,7 bis 17,5 Gew. % Fluorpolymer, 1,8 bis 8,0 Gew. % Pigment und Rest Wasser. Eine andere bevorzugte verarbeitungsfertige Naßbeschichtung enthält in Gewichtsprozenten 0 bis 10 Gew.% Bindeharz, 0,2 bis 4,0 Gew.% Entschäumer, 0,5 bis 7,0 Gew. % Verlaufsmittel, 0,1 bis 1,2 Gew.% Ruß, 0 bis 0,8 Gew.% SiO₂, 0,2 bis 5,5 Gew. % viskositätsmodifizierende/homogenisierende Mittel, 0,05 bis 4,8 Gew.% Pigment, 0,1 bis 1,4 Gew.% Glimmer, 0 bis 5,5 Gew.% acrylatisches Sinterhilfsmittel, 25,0 bis 45,0 Gew.% Fluorpolymer und Rest Wasser.

Noch eine weitere bevorzugte verarbeitungsfertige Naßbeschichtung enthält in Gewichtsprozenten 0,2 bis 4,0 Gew.% Entschäumer, 0,4 bis 7,2 Gew.% Verlaufsmittel, 0,1 bis 1,0 Gew.% Ruß, 0 bis 0,9 Gew.% SiO₂, 0,2 bis 5,5 Gew.% viskositätsmodifizierende homogenisierende Mittel, 0 bis 5,5 Gew.% acrylatisches Sinterhilfsmittel, 0,05 bis 1,5 Gew.% Pigment, 0 bis 1,6 Gew.% Glimmer, 30,0 bis 45,0 Gew.% Fluorpolymer und Rest Wasser.

Die erste dieser drei bevorzugten Naßbeschichtungen dient zweckmäßig zur Herstellung der Grundschicht, die zweite zur Herstellung einer Mittelschicht und die dritte zur Herstellung einer Deckschicht.

### Beispiel 1

Die folgende Rezeptur ist besonders zur Herstellung einer Grundschicht einer erfindungsgemäßen Beschichtung geeignet.

| Komponente | Mittlere Primarteilchengröße [nm] | Prozentualer Anteil in 100g verarbeitungsfertiger Beschichtung |
|---|---|---|
| PAI - Trionharz 9020 (Hoechst AG) in wässringer, aminneutralisierter Lösung, Festkörper : 15 Gew.% | --- | 40.00 |
| iso - Butanol (Entschäumer und Deflockulierungsmittel) | --- | 3.00 |
| Surfynol 440 (ethoxyliertes Acetylenglykol) (Air Products) | --- | 0.40 |
| Printex 200 (Ruß, Degussa) in wässriger Dispersion , Festkörper : 25 Gew.% | 56 | 4.80 |
| Printex 60 (Ruß, Degussa) in wässriger Dispersion, Festkörper : 10 Gew.% | 21 | 4.00 |
| Printex 90 (Ruß, Degussa) in wässriger Dispersion, Festkörper : 10 Gew.% | 14 | 2.00 |
| Co-Al-Spinell (PK5091, Ferro), in wässriger Dispersion , Festkörper : 45 Gew.% | 1000 | 17.00 |
| Levasil - Kieselsol 200 A (Bayer AG), Festkörper : 30 Gew.% | 15-20 | 1.95 |
| Levasil - Kieselsol 300 (Bayer AG), Festkörper : 30 Gew.% | 7-8 | 0.90 |
| Triton X100 (Octylphenolpolyetheralkohol) (Rohm & Haas) | --- | 1.00 |
| TF 5050 (PTFE - Dispersion, Dyneon GmbH), Festkörper : 58 Gew.% | 100/240 | 18.0 |
| Entmineralisiertes Wasser | --- | 6.95 |

### Beispiel 2

Die folgende Rezeptur ist besonders zur Herstellung einer Grundschicht einer erfindungsgemäßen Beschichtung geeignet.

| | | |
|---|---|---|
| PAI - Harz Resistherm Al 244 (Bayer AG) in wässriger, aminneutralisierter Lösung, Festkörper : 15 Gew.% | --- | 41.50 |
| n - Butanol (Entschäumer und Deflockulierungsmittel) | --- | 3.20 |
| Surfynol 440 (Homogenisierungsmittel) | --- | 0.35 |
| Printex A (Ruß, Degussa) in wässriger Dispersion, Festkörper : 25 Gew.% | 41 | 4.20 |
| Printex 60, siehe Bespiel 1 | 21 | 5.70 |
| Titandioxid R522 (Sachtleben Chemie) in wässriger Dispersion, Festkörper : 45 Gew.% | 250 | 13.50 |
| Titandioxid Hombitec RM 300 (Sachtleben Chemie) in wässriger Dispersion, Festkörper : 10 Gew.% | 15 | 6.65 |
| Iriodin 100 (Glimmer, Merck) | 10-60 µm | 0.08 |
| Levasil 300, siehe Beispiel 1 | 7-8 | 4.00 |
| Triton X100 (Verlaufsmittel) | --- | 1.00 |
| TF 5050, siehe Beispiel 1 | 100/240 | 17.50 |
| Entmineralisiertes Wasser | --- | 2.32 |

### Beispiel 3

Die folgende Rezeptur eignet sich insbesondere für die Herstellung einer Mittelschicht einer dreilagigen Beschichtung nach der Erfindung.

| Komponente | Mittlere Primärteilchengröße [nm] | Prozentualer Anteil in 100g verarbeitungsfertiger Beschichtung |
|---|---|---|
| Butyldiglykol (Diethylenglykolmonobutylether, Homogenisierungsmittel) | --- | 1.8 |
| Triethanolamin (Homogenisierungsmittel) | --- | 2.4 |
| Triton X 100 (Verlaufsmittel) | --- | 1.8 |
| Xylol (Entschäumer) | --- | 2.2 |
| Modaflow AQ 3000 , Festkörper : 50 Gew.% (Monsanto); (Sinterhilfsmittel) | --- | 10.0 |
| Iriodin 153 (Merck); Glimmer zur Farbgestaltung | 20 - 100 µm | 0.8 |
| Ruß Printex 200, siehe Bsp. 1 | 56 | 1.4 |
| Ruß Printex 60, siehe Bsp. 1 | 21 | 1.1 |
| TiO₂ RM300, siehe Bsp. 2 | 15 | 1.0 |
| Entmineralisiertes Wasser | --- | 10.9 |
| TF 5050, siehe Beispiel 1 | 240 / 100 | 66.6 |

### Beispiel 4

Die folgende Rezeptur dient vorzugsweise als Deckschicht entweder in einer zweilagigen oder in einer dreilagigen Beschichtung.

| Komponente | Mittlere Primärteilchengröße [nm] | Prozentualer Anteil in 100g verarbeitungsfertiger Beschichtung |
|---|---|---|
| Butyldiglykolacetat [2-(2-Butoxyethoxy)-ethyl]-acetat | --- | 1.9 |
| Triethanolamin | --- | 2.2 |
| Triton X100 | --- | 1.9 |
| Solvesso 100 | --- | 2.1 |
| Worleecryl 8043 (Worlee Chemie), Festkörper : 40 Gew.% in Wasser/Alkohol; Sinterhilfsmittel | --- | 11.2 |
| Ruß Printex 200, siehe Bsp. 1 | 56 | 1.6 |
| Ruß Printex 90, siehe Bsp. 1 | 14 | 0.4 |
| Levasil - Kieselsol 100 (Bayer AG), Festkörper : 30 Gew.% | 27 | 1.0 |
| Mearlin Sparkle (Costenoble) | 10 - 100 µm | 1.1 |
| TF 5050, siehe Bsp. 1 | 240 / 100 | 69.3 |
| Entmineralisiertes Wasser | --- | 7.4 |

Die Korrosionsresistenz wurde anhand von erfindungsgemäß beschichteten Aluminiumblechen ermittelt, die über einen Zeitraum von 72 h in eine kochende, 10 Gew. % Kochsalz enthaltende wäßrige Lösung eingebracht wurden und anschließend mittels Sichtprüfung auf Blasenbildung und mittels 2 mm Gitterschicht mit 10fachem Tesaabriß auf Substrathaftung und im Falle von mehrlagigen Beschichtungsaufbauten ebenso auf Zwischenhaftung der Schichten überprüft wurden. Die Ergebnisse sind in Tabelle 1 aufgezeigt. Die Oberflächenrauhigkeit der Substrate betrug im Mittel weniger als 0,8 µm, wie zuverlässig durch ein Perthometer der Firma Feinprüf Perthen GmbH ermittelt werden kann.

| **Beschichtungsaufbau** | **Testergebnisse** |
|---|---|
| Grundschicht Bsp. 1 | Gitterschnittprüfung : Kein Haftungsverlust |
| Deckschicht Bsp. 4 | Blasenbildung : < 2% der belasteten Fläche |
| Grundschicht Bsp. 2 | Gitterschnittprüfung : Kein Haftungsverlust |
| Deckschicht Bsp. 4 | Blasenbildung : < 2% der belasteten Fläche |
| Grundschicht Bsp. 1 | Gitterschnittprüfung : Kein Haftungsverlust |
| Mittelschicht Bsp. 3 | Blasenbildung : Nahezu keine Blasenbildung |
| Deckschicht Bsp. 4 | |
| Grundschicht Bsp. 2 | Gitterschnittprüfung : Kein Haftungsverlust |
| Mittelschicht Bsp. 3 | Blasenbildung : < 1% der belasteten Fläche |
| Deckschicht Bsp. 4 | |

## Patentansprüche

1. Wenigstens zum Teil aus Metall, Keramik, Email oder Glas bestehender Gegenstand mit einer wengistens einlagigen, wenigstens einen Teil des Gegenstandes bedeckenden Beschichtung, die anorganisches und/oder organisches Pigment, Fluorpolymer und als Bindeharz wenigstens eines vom Typ der Polyamidimide, Polyimide, Polyetherimide, Polyethersulfone, Polyphenylensulfide, Polyetherketone, Siliconharze oder eine Mischung wenigstens zweier derselben enthält, wobei das Gewichtsverhältnis des gesamten Bindeharzes zu dem gesamten Fluorpolymeren in der direkt mit der Oberfläche des Gegenstandes in Kontakt stehenden Schicht 1,5 : 1 bis 1 : 3 beträgt, **dadurch gekennzeichnet, daß** die Gesamtbeschichtung, bezogen auf das gesamte enthaltene Fluorpolymer, 0,05 bis 25 Gew.% anorganisches und/oder von den Bindeharzen und den Fluorpolymeren verschiedenes organisches Pigment enthält, wobei wenigstens 10 Gew. % des gesamten in der Beschichtung enthaltenen Pigments Primärteilchengrößen aufweisen, die im Bereich von 2,5 bis 50 % des Durchmessers der größten enthaltenen Fluorpolymerteilchen mit dem höchsten Gewichtsanteil liegen und wenigstens 10 Gew.% des gesamten in der Beschichtung enthaltenen Pigments Primärteilchengrößen aufweisen, deren Durchmesser dem ein- bis fünffachen Durchmesser der größten enthaltenen Fluorpolymerteilchen mit dem höchsten Gewichtsanteil entsprechen.

2. Gegenstand nach Anspruch 1, **dadurch gekennzeichnet, daß** seine Beschichtung wenigstens ein anorganisches Pigment enthält.

3. Gegenstand nach Anspruch 1 oder 2, **dadurch gekennzeichnet, daß** seine Beschichtung anorganisches Pigment mit mindestens zwei unterschiedlichen Primärteilchengrößen enthält.

4. Gegenstand nach einem der Ansprüche 1 bis 3, **dadurch gekennzeichnet, daß** seine Beschichtung als Pigment Ruß, Siliciumdioxid, Titandioxid oder Kobalt-Aluminium-Mischoxid vom Spinelltyp, Kobaltphosphat, ZnFe₂O₄, (Fe₂Mn)₂O₃-Mischoxid, Cu(Cr,Fe)₂O₄,Cr₂O₃, Fe₂O₃,FeO, Aluminiumsilicat, Aluminiumoxid, Talkum, BaSO₄ oder keramische Füllkörper enthält.

5. Gegenstand nach einem der Ansprüche 1 bis 4, **dadurch gekennzeichnet, daß** wenigstens 10 Gew.% des gesamten in der Beschichtung enthaltenen Pigments Primärteilchengrößen aufweisen, die im Bereich von 5 bis 42 % des Durchmessers der größten enthaltenen Fluorpolymerteilchen mit dem höchsten Gewichtsanteil liegen.

6. Gegenstand nach einem der Ansprüche 1 bis 5, **dadurch gekennzeichnet, daß** jeweils wenigstens 20, besonders jeweils wenigstens 30 Gew.% des gesamten in der Beschichtung enthaltenen Pigments Primärteilchengrößen aufweisen, die einerseits im Bereich von 2,5 bis 50 % und andererseits im Bereich des Ein- bis Fünffachen des Durchmessers der größten enthaltenen Fluorpolymerteilchen mit dem höchsten Gewichtsanteil liegen.

7. Gegenstand nach einem der Ansprüche 1 bis 6, **dadurch gekennzeichnet, daß** von dem gesamten in der Beschichtung enthaltenen Pigment jeweils mindestens 5 Gew.% Primärteilchen Größen im Bereich von 39 bis 42 %, 20 bis 24 %, 9 bis 13 % und 5 bis 8 % des Durchmessers der größten enthaltenen Fluorpolymerteilchen mit dem höchsten Gewichtsanteil haben.

8. Gegenstand nach einem der Ansprüche 1 bis 7, **dadurch gekennzeichnet, daß** das Fluorpolymere aus einer Mischung mit wenigstens zwei unterschiedlichen Teilchengrößenverteilungen (bimodal) besteht.

9. Gegenstand nach einem der Ansprüche 1 bis 8, **dadurch gekennzeichnet, daß** das Fluorpolymere eine Mischung aus wenigstens einem nicht aus der Schmelze verarbeitbaren Fluorpolymeren und wenigstens einem thermoplastischen Fluorpolymeren besteht.

10. Gegenstand nach Anspruch 9, **dadurch gekennzeichnet, daß** die Fluorpolymermischung aus bis zu 18 Gew.% des thermoplastischen Fluorpolymeren besteht und dessen mittlerer Primärteilchendurchmesser bis zu 42 % des mittleren Primärteilchendurchmessers der nicht aus der Schmelze verarbeitbaren Fluorpolymeren beträgt.

11. Gegenstand nach einem der Ansprüche 9 und 10, **dadurch gekennzeichnet, daß** das nicht aus der Schmelze verarbeitbare Fluorpolymere ein Tetrafluorethylenhomopolymer oder ein mit Hexafluorpropylen oder Perfluoralkylether modifiziertes Polytetrafluorethylen ist.

12. Gegenstand nach einem der Ansprüche 9 bis 11, **dadurch gekennzeichnet, daß** das nicht aus der Schmelze verarbeitbare Fluorpolymer aus qualitativ oder quantitativ inhomogenen Partikeln besteht.

13. Gegenstand nach einem der Ansprüche 9 bis 11, **dadurch gekennzeichnet, daß** das thermoplastische Fluorpolymer ein Copolymer aus Perfluoralkylvinylether und Tetrafluorethylen und/oder Hexafluorpropylen und Tetrafluorethylen ist.

14. Verfahren zur Herstellung eines wenigstens zum Teil aus Metall, Keramik, Email oder Glas bestehenden Gegenstandes mit einer wenigstens einlagigen, wenigstens einen Teil des Gegenstandes bedeckenden Beschichtung durch Beschichten wenigstens eines Teils des Gegenstandes mit wenigstens einer wäßrigen Dispersion von anorganischem und/oder organischem Pigment, Fluorpolymer und wenigstens eines Bindeharzes vom Typ der Polyamidimide, Polyimide, Polyetherimide, Polyethersulfone, Polyphenylensulfide, Polyetherketone, Siliconharze oder einer Mischung wenigstens zweier derselben, wobei das Gewichtsverhältnis des gesamten Bindeharzes zu dem gesamten Fluorpolymeren in der direkt mit der Oberfläche des Gegenstandes in Kontakt gebrachten Schicht 1,5 : 1 bis 1 : 3 beträgt, Trocknen der nassen Beschichtung und Erhitzen, **dadurch gekennzeichnet, daß** man in einem oder mehreren aufeinanderfolgenden Arbeitsgängen derart zusammengesetzte wäßrige Dispersionen auf dem Gegenstand aufbringt, daß die Gesamtbeschichtung, bezogen auf das gesamte enthaltene Fluorpolymer, 0,05 bis 25 Gew.% anorganisches und/oder von den Bindeharzen und den Fluorpolymeren verschiedenes organisches Pigment enthält, wobei wenigstens 10 Gew.% des gesamten in der Beschichtung enthaltenen Pigments Primärteilchengrößen aufweisen, die im Bereich von 2,5 bis 50 % des Durchmessers der größten enthaltenen Fluorpolymerteilchen mit dem höchsten Gewichtsanteil liegen und wenigstens 10 Gew. % des gesamten in der Beschichtung enthaltenen Pigments Primärteilchengrößen aufweisen, deren Durchmesser dem ein- bis fünffachen Durchmesser der größten enthaltenen Fluorpolymerteilchen mit dem höchsten Gewichtsanteil entsprechen.

15. Verfahren nach Anspruch 14, **dadurch gekennzeichnet, daß** man eine zweilagige Beschichtung aufbringt, ohne vor der Aufbringung der Deckschicht die Grundschicht zu trockenen, und am Ende der Aufbringung trocknet.

16. Verfahren nach Anspruch 14, **dadurch gekennzeichnet, daß** man eine dreilagige Beschichtung aufbringt und dabei die Grundschicht kurz antrocknet und die Mittelschicht entweder überhaupt nicht oder nur kurz antrocknet.

17. Verfahren nach Anspruch 13 bis 16, **dadurch gekennzeichnet, daß** man einen Gegenstand verwendet, dessen zu beschichtende Oberfläche eine mittlere Oberflächenrauhigkeit kleiner als 5 µm besitzt und frei von haftungsvermindernden Verunreinigungen ist.

18. Verfahren nach Anspruch 13 bis 17, **dadurch gekennzeichnet, daß** man mit einer wäßrigen Dispersion beschichtet, die 4,0 bis 18,0 Gew.% Bindeharz, 0,2 bis 4,0 Gew.% Entschäumer, 0,5 bis 7,0 Gew.% Verlaufsmittel, 0,6 bis 2,0 Gew.% Ruß, 0,4 bis 2,5 Gew.% SiO₂, 0 bis 5,2 Gew.% viskositätsmodifizierende, homogenisierende Mittel, 2,7 bis 17,5 Gew.% Fluorpolymer, 1,8 bis 8,0 Gew.% Pigment und Rest Wasser enthält.

19. Verfahren nach Anspruch 13 bis 18, **dadurch gekennzeichnet, daß** man mit einer wäßrigen Dispersion beschichtet, die 0 bis 10 Gew.% Bindeharz, 0,2 bis 4,0 Gew. % Entschäumer, 0,5 bis 7,0 Gew.% Verlaufsmittel, 0,1 bis 1,2 Gew.% Ruß, 0 bis 0,8 Gew.% SiO₂, 0,2 bis 5,5 Gew.% viskositätsmodifizierende/homogenisierende Mittel, 0,05 bis 4,8 Gew.% Pigment, 0,1 bis 1,4 Gew.% Glimmer, 0 bis 5,5 Gew.% acrylatisches Sinterhilfsmittel, 25,0 bis 45,0 Gew.% Fluorpolymer und Rest Wasser enthält.

20. Verfahren nach Anspruch 13 bis 19, **dadurch gekennzeichnet, daß** man mit einer wäßrigen Dispersion beschichtet, die 0,2 bis 4,0 Gew.% Entschäumer, 0,4 bis 7,2 Gew.% Verlaufsmittel, 0,1 bis 1,0 Gew.% Ruß, 0 bis 0,9 Gew.% SiO₂, 0,2 bis 5,5 Gew.% viskositätsmodifizierende homogenisierende Mittel, 0 bis 5,5 Gew.% acrylatisches Sinterhilfsmittel, 0,05 bis 1,5 Gew.% Pigment, 0 bis 1,6 Gew.% Glimmer, 30,0 bis 45,0 Gew.% Fluorpolymer und Rest Wasser enthält.

21. Verwendung eines Gegenstandes nach einem der Ansprüche 1 bis 13 als Koch-, Back- oder Bratgerät.

22. Beschichtungsmaterial von anorganischem und/oder organischem Pigment, Fluorpolymer und wenigstens einem Bindeharz vom Typ der Polyamid-imide, Polyimide, Polyetherimide, Polyethersulfone, Polyphenylensulfide, Polyetherketone, Siliconharze und Mischungen wenigstens zweier derselben, **dadurch gekennzeichnet, dass** sie, bezogen auf das gesamte enthaltene Fluorpolymer, 0,05 bis 25 Gew.% anorganisches und/oder von den Bindeharzen und den Fluorpolymeren verschiedenes organisches Pigment enthält, wobei wenigstens 10 Gew.% des gesamten in der Beschichtung enthaltenen Pigments Primärteilchengrößen aufweisen, die im Bereich von 2,5 bis 50 % des Durchmessers der größten enthaltenen Fluorpolymerteilchen mit dem höchsten Gewichtsanteil liegen und wenigstens 10 Gew.% des gesamten in der Beschichtung enthaltenen Pigments Primärteilchengrößen aufweisen, deren Durchmesser dem 1- bis 5fachen Durchmesser der größten enthaltenen Fluorpolymerteilchen mit dem höchsten Gewichtsanteil entsprechen.

23. Beschichtungsmaterial nach Anspruch 22, **dadurch gekennzeichnet, dass** sie 4,0 bis 18,0 Gew.% Bindeharz, 0,2 bis 4,0 Gew.% Entschäumer, 0,5 bis 7,0 Gew.% Verlaufsmittel, 0,6 bis 2,0 Gew.% Ruß, 0,4 bis 2,5 Gew.% SiO₂, 0 bis 5,2 Gew.% viskositätsmodifizierende, homogenisierende Mittel, 2,7 bis 17,5 Gew.% Fluorpolymer, 1,8 bis 8,0 Gew.% Pigment und Rest Wasser enthält.

24. Beschichtungsmaterial nach Anspruch 22, **dadurch gekennzeichnet, dass** sie 0 bis 10 Gew.% Bindeharz, 2 bis 4,0 Gew.% Entschäumer, 0,5 bis 7,0 Gew.% Verlaufsmittel, 0,1 bis 1,2 Gew.% Ruß, 0 bis 5,8 Gew.% SiO₂, 0,2 bis 5,5 Gew.% viskositätsmodifizierende/homogenisierende Mittel, 0,05 bis 4,8 Gew.% Pigment, 0,1 bis 1,4 Gew.% Glimmer, 0 bis 5,5 Gew.% acrylatisches Sinterhilfsmittel, 25,0 bis 45,0 Gew.% Fluorpolymer und Rest Wasser enthält.

25. Beschichtungsmaterial nach Anspruch 22, **dadurch gekennzeichnet, dass** sie 0,2 bis 4,0 Gew.% Entschäumer, 0,4 bis 7,2 Gew.% Verlaufsmittel, 0,1 bis 1,0 Gew.% Ruß, 0 bis 0,9 Gew.% SiO₂, 0,2 bis 5,5 Gew.% viskositätsmodifizierende, homogenisierende Mittel, 0 bis 5,5 Gew.% acrylatisches Sinterhilfsmittel, 0,05 bis 1,5 Gew.% Pigment, 0 bis 1,6 Gew.% Glimmer, 30,0 bis 45,0 Gew.% Fluorpolymer und Rest Wasser enthält.

26. Beschichtungsmaterial nach einem der Ansprüche 22 bis 25, **dadurch gekennzeichnet, dass** sie ein Gewichtsverhältnis von Bindeharz zu Fluorpolymer insgesamt im Bereich von 1 ,5 : 1 bis 1 : 3 hat.

27. Beschichtungsmaterial nach einem der Ansprüche 22 bis 26, **dadurch gekennzeichnet, dass** sie anorganisches Pigment mit mindestens zwei unterschiedlichen Primärteilchengrößen enthält.

28. Beschichtungsmaterial nach einem der Ansprüche 22 bis 27, **dadurch gekennzeichnet, dass** sie als Pigment Ruß, Siliciumdioxid,Titandioxid oder Kobalt-Aluminium-Mischoxid vom Spinelltyp, Kobaltphosphat, ZnFe₂O₄, (Fe₂Mn)₂O₃-Mischoxid, Cu(Cr,Fe)₂O₄, Cr₂O₃, Fe₂O₃, FeO, Aluminiumsilicat, Aluminiumoxid, Talkum, BaSO₄ oder keramische Füllkörper enthält.

29. Beschichtungsmaterial nach einem der Ansprüche 22 bis 28, **dadurch gekennzeichnet, dass** wenigstens 10 Gew.% des gesamten enthaltenen Pigments Primärteilchengrößen aufweise, die im Bereich von 5 bis 42 % des Durchmessers der größten enthaltenen Fluorpolymerteilchen mit dem höchsten Gewichtsanteil liegen.

30. Beschichtungsmaterial nach einem der Ansprüche 22 bis 29, **dadurch gekennzeichnet, dass** jeweils wenigstens 20, besonders jeweils wenigstens 30 Gew.% des gesamten in der Beschichtung enthaltenen Pigments Primärteilchengrößen aufweise, die einerseits im Bereich von 2,5 bis 50 % und andererseits im Bereich des Ein- bis Fünffachen des Durchmessers der größten enthaltenen Fluorpolymerteilchen mit dem höchsten Gewichtsanteil liegen.

31. Beschichtungsmaterial nach einem der Ansprüche 22 bis 30, **dadurch gekennzeichnet, dass** von dem gesamten in der Beschichtung enthaltenen Pigment jeweils mindestens 5 Gew.% Primärteilchengrößen im Bereich von 39 bis 42 %, 20 bis 24 %, 9 bis 13 % und 5 bis 8 % des Durchmessers der größten enthaltenen Fluorpolymerteilchen mit dem höchsten Gewichtsanteil haben.

32. Beschichtungsmaterial nach einem der Ansprüche 22 bis 31, **dadurch gekennzeichnet, dass** das Fluorpolymere aus einer Mischung mit wenigstens zwei unterschiedlichen Teilchengrößenverteilungen (bimodal) besteht.

33. Beschichtungsmaterial nach einem der Ansprüche 22 bis 32, **dadurch gekennzeichnet, dass** das Fluorpolymere eine Mischung aus wenigstens einem nicht aus der Schmelze verarbeitbaren Fluorpolymer und wenigstens einem thermoplastischen Fluorpolymer besteht.

34. Beschichtungsmaterial nach einem der Ansprüche 22 bis 33, **dadurch gekennzeichnet, dass** das Fluorpolymere bimodal oder multimodal mit wenigstens zwei unterschiedlichen Teilchengrößenverteilungen ist.

## Claims

1. An article which at least partially comprises metal, ceramic, enamel or glass, with an at least single-layer coating which covers at least a part of the article and which contains inorganic and/or organic pigment, fluoropolymer and as a binding resin at least one of the type of polyamide imides, polyimides, polyether imides, polyether sulphones, polyphenylene sulphides, polyether ketones, silicone resins or a mixture of at least two thereof, wherein the ratio by weight of the total binding resin to the total fluoropolymer in the layer which is directly in contact with the surface of the article is 1.5:1 to 1:3, **characterised in that** the total coating, with respect to the total contained fluoropolymer, contains 0.05 to 25% by weight of inorganic and/or organic pigment which is different from the binding resins and fluoropolymers, wherein at least 10% by weight of the total pigment contained in the coating has primary particle sizes which are in the range of 2.5 to 50% of the diameter of the largest contained fluoropolymer particles with the highest proportion by weight, and at least 10% by weight of the total pigment contained in the coating has primary particle sizes whose diameters correspond to from one to five times the diameter of the largest contained fluoropolymer particles with the highest proportion by weight.

2. An article according to claim 1 **characterised in that** its coating contains at least one inorganic pigment.

3. An article according to claim 1 or claim 2 **characterised in that** its coating contains inorganic pigment with at least two different primary particle sizes.

4. An article according to one of claims 1 to 3 **characterised in that** its coating contains as pigment carbon black, silicon dioxide, titanium dioxide or cobalt-aluminium mixed oxide of spinel type, cobalt phosphate, ZnFe₂O₄, (Fe₂Mn)₂O₃-mixed oxide, Cu(Cr,Fe)₂O₄, Cr₂O₃, Fe₂O₃, FeO, aluminium silicate, aluminium oxide, talc, BaSO₄ or ceramic fillers.

5. An article according to one of claims 1 to 4 **characterised in that** at least 10% by weight of the total pigment contained in the coating has primary particle sizes which are in the range of 5 to 42% of the diameter of the largest contained fluoropolymer particles with the highest proportion by weight.

6. An article according to one of claims 1 to 5 **characterised in that** in each case at least 20% and in particular in each case at least 30% by weight of the total pigment contained in the coating has primary particle sizes which on the one hand are in the range of 2.5 to 50% and on the other hand are in the range of one to five times the diameter of the largest contained fluoropolymer particles with the highest proportion by weight.

7. An article according to one of claims 1 to 6 **characterised in that** of the total pigment contained in the coating in each case at least 5% by weight of primary particles involve sizes in the range of 39 to 42%, 20 to 24%, 9 to 13% and 5 to 8% of the diameter of the largest contained fluoropolymer particles with the highest proportion by weight.

8. An article according to one of claims 1 to 7 **characterised in that** the fluoropolymer comprises a mixture with at least two different particle size distributions (bimodal).

9. An article according to one of claims 1 to 8 **characterised in that** the fluoropolymer comprises a mixture of at least one fluoropolymer which cannot be processed from the molten condition and at least one thermoplastic fluoropolymer.

10. An article according to claim 9 **characterised in that** the fluoropolymer mixture comprises up to 18% by weight of the thermoplastic fluoropolymer and its mean primary particle diameter is up to 42% of the mean primary particle diameter of the fluoropolymers which cannot be processed from the molten condition.

11. An article according to one of claims 9 and 10 **characterised in that** the fluoropolymer which cannot be processed from the molten condition is a tetrafluoroethylene homopolymer or a polytetrafluoroethylene which is modified with hexafluoropropylene or perfluoroalkyl ether.

12. An article according to one of claims 9 to 11 **characterised in that** the fluoropolymer which cannot be processed from the molten condition comprises qualitatively or quantitatively non-homogenous particles.

13. An article according to one of claims 9 to 11 **characterised in that** the thermoplastic fluoropolymer is a copolymer of perfluoroalkyl vinyl ether and tetrafluoroethylene and/or hexafluoropropylene and tetrafluoroethylene.

14. A process for the production of an article at least partially comprising metal, ceramic, enamel or glass, with an at least single-layer coating which covers at least a part of the article, by coating at least a part of the article with at least one aqueous dispersion of inorganic and/or organic pigment, fluoropolymer and at least one binding resin of the type of polyamide imides, polyimdes, polyether imides, polyether sulphones, polyphenylene sulphides, polyether ketones, silicone resins or a mixture of at least two thereof, wherein the ratio by weight of the total binding resin to the total fluoropolymer in the layer which is directly in contact with the surface of the article is 1.5:1 to 1:3, drying of the wet coating and heating, **characterised in that** aqueous dispersions which are of such a composition are applied to the article in one or more successive working operations, that the total coating, in relation to the total contained fluoropolymer, contains 0.05 to 25% by weight of inorganic and/or organic pigment which is different from the binding resins and the fluoropolymers, wherein at least 10% by weight of the total pigment contained in the coating involves primary particle sizes which are in the range of 2.5 to 50% of the diameter of the largest contained fluoropolymer particles with the highest proportion by weight and at least 10% by weight of the total pigment contained in the coating involves primary particle sizes whose diameters correspond to one to five times the diameter of the largest contained fluoropolymer particles with the highest proportion by weight.

15. A process according to claim 14 **characterised in that** a two-layer coating is applied without the base layer being dried prior to application of the cover layer, and drying is effected at the end of the application operation.

16. A process according to claim 14 **characterised in that** a three-layer coating is applied and **in that** case the base layer is briefly initially dried and the middle layer is either not dried at all or is only briefly initially dried.

17. A process according to claims 13 to 16 **characterised by** using an article whose surface to be coated has a mean surface roughness of less than 5 µm and is free from adhesion-reducing impurities.

18. A process according to claims 13 to 17 **characterised in that** coating is effected with an aqueous dispersion which contains 4.0 to 18.0% by weight of binding resin, 0.2 to 4.0% by weight of anti-foam agent, 0.5 to 7.0% by weight of flow agent, 0.6 to 2.0% by weight of carbon black, 0.4 to 2.5% by weight of SiO₂, 0 to 5.2% by weight of viscosity-modifying, homogenising agents, 2.7 to 17.5 % by weight of fluoropolymer, 1.8 to 8.0% by weight of pigment and the balance water.

19. A process according to claims 13 to 18 **characterised in that** coating is effected with an aqueous dispersion which contains 0 to 10% by weight of binding resin, 0.2 to 4.0% by weight of anti-foam agent, 0.5 to 7.0% by weight of flow agent, 0.1 to 1.2% by weight of carbon black, 0 to 0.8% by weight of SiO₂, 0.2 to 5.5% by weight of viscosity-modifying/homogenising agents, 0.05 to 4.8% by weight of pigment, 0.1 to 1.4% by weight of mica, 0 to 5.5% by weight of acrylatic sintering aid, 25.0 to 45.0% by weight of fluoropolymer and the balance water.

20. A process according to claims 13 to 19 **characterised in that** coating is effected with an aqueous dispersion which contains 0.2 to 4.0% by weight of anti-foam agent, 0.4 to 7.2% by weight of flow agent, 0.1 to 1.0% by weight of carbon black, 0 to 0.9% by weight of SiO₂, 0.2 to 5.5% by weight of viscosity-modifying, homogenising agents, 0 to 5.5% by weight of acrylatic sintering aid, 0.05 to 1.5% by weight of pigment, 0 to 1.6% by weight of mica, 30.0 to 45.0% by weight of fluoropolymer and the balance water.

21. Use of an article according to one of claims 1 to 13 as cooking, baking or frying or roasting equipment.

22. A coating material of inorganic and/or organic pigment, fluoropolymer and at least one binding resin of the type of polyamide imides, polyimdes, polyether imides, polyether sulphones, polyphenylene sulphides, polyether ketones, silicone resins or a mixture of at least two thereof, **characterised in that** in relation to the total contained fluoropolymer it contains 0.05 to 25% by weight of inorganic and/or organic pigment which is different from the binding resins and the fluoropolymers, wherein at least 10% by weight of the total pigment contained in the coating involves primary particle sizes which are in the range of 2.5 to 50% of the diameter of the largest contained fluoropolymer particles with the highest proportion by weight and at least 10% by weight of the total pigment contained in the coating involves primary particle sizes whose diameters correspond to one to five times the diameter of the largest contained fluoropolymer particles with the highest proportion by weight.

23. A coating material according to claim 22 **characterised in that** it contains 4.0 to 18.0% by weight of binding resin, 0.2 to 4.0% by weight of anti-foam agent, 0.5 to 7.0% by weight of flow agent, 0.6 to 2.0% by weight of carbon black, 0.4 to 2.5% by weight of SiO₂, 0 to 5.2% by weight of viscosity-modifying, homogenising agents, 2.7 to 17.5 % by weight of fluoropolymer, 1.8 to 8.0% by weight of pigment and the balance water.

24. A coating material according to claim 22 **characterised in that** it contains 0 to 10% by weight of binding resin, 0.2 to 4.0% by weight of anti-foam agent, 0.5 to 7.0% by weight of flow agent, 0.1 to 1.2% by weight of carbon black, 0 to 5.8% by weight of SiO₂, 0.2 to 5.5% by weight of viscosity-modifying/homogenising agents, 0.05 to 4.8% by weight of pigment, 0.1 to 1.4% by weight of mica, 0 to 5.5% by weight of acrylatic sintering aid, 25.0 to 45.0% by weight of fluoropolymer and the balance water.

25. A coating material according to claim 22 **characterised in that** it contains 0.2 to 4.0% by weight of anti-foam agent, 0.4 to 7.2% by weight of flow agent, 0.1 to 1.0% by weight of carbon black, 0 to 0.9% by weight of SiO₂, 0.2 to 5.5% by weight of viscosity-modifying, homogenising agents, 0 to 5.5% by weight of acrylatic sintering aid, 0.05 to 1.5% by weight of pigment, 0 to 1.6% by weight of mica, 30.0 to 45.0% by weight of fluoropolymer and the balance water.

26. A coating material according to one of claims 22 to 25 **characterised in that** it has a ratio by weight of binding resin to fluoropolymer overall in the range of 1.5:1 to 1:3.

27. A coating material according to one of claims 22 to 26 **characterised in that** it contains inorganic pigment with at least two different primary particle sizes.

28. A coating material according to one of claims 22 to 27 **characterised in that** it contains as pigment carbon black, silicon dioxide, titanium dioxide or cobalt-aluminium mixed oxide of spinel type, cobalt phosphate, ZnFe₂O₄, (Fe₂Mn)₂O₃-mixed oxide, Cu(Cr,Fe)₂O₄, Cr₂O₃, Fe₂O₃, FeO, aluminium silicate, aluminium oxide, talc, BaSO₄ or ceramic fillers.

29. A coating material according to one of claims 22 to 28 **characterised in that** at least 10% by weight of the total pigment contained in the coating has primary particle sizes which are in the range of 5 to 42% of the diameter of the largest contained fluoropolymer particles with the highest proportion by weight.

30. A coating material according to one of claims 22 to 29 **characterised in that** in each case at least 20% and in particular in each case at least 30% by weight of the total pigment contained in the coating has primary particle sizes which on the one hand are in the range of 2.5 to 50% and on the other hand are in the range of one to five times the diameter of the largest contained fluoropolymer particles with the highest proportion by weight.

31. A coating material according to one of claims 22 to 30 **characterised in that** of the total pigment contained in the coating in each case at least 5% by weight involve primary particles sizes in the range of 39 to 42%, 20 to 24%, 9 to 13% and 5 to 8% of the diameter of the largest contained fluoropolymer particles with the highest proportion by weight.

32. A coating material according to one of claims 22 to 31 **characterised in that** the fluoropolymer comprises a mixture with at least two different particle size distributions (bimodal).

33. A coating material according to one of claims 22 to 32 **characterised in that** the fluoropolymer comprises a mixture of at least one fluoropolymer which cannot be processed from the molten condition and at least one thermoplastic fluoropolymer.

34. A coating material according to one of claims 22 to 33 **characterised in that** the fluoropolymer is bimodal or multimodal with at least two different particle size distributions.

## Revendications

1. Objet composé au moins en partie de métal, de céramique, d'émail ou de verre et comportant un revêtement au moins monocouche, recouvrant au moins une partie de l'objet, revêtement qui comprend un pigment inorganique et/ou organique, un polymère fluoré et, en tant que résine liante, au moins une résine du type des polyamidimides, des polyimides, des polyétherimides, des polyéthersulfones, des sulfures de polyphénylène, des polyéthercétones, des résines de silicone ou un mélange, d'au moins deux de ceux-ci, dans lequel le rapport pondéral entre l'ensemble de la résine liante et l'ensemble du polymère fluoré dans la couche directement en contact avec la surface de l'objet est compris entre 1,5:1 et 1:3, **caractérisé en ce que** l'ensemble du revêtement, sur la base de l'ensemble du polymère fluoré contenu, contient 0,05 à 25 % en poids de pigment inorganique et/ou de pigment organique différent de la résine liante et du polymère fluoré, où au moins 10 % en poids de l'ensemble du pigment contenu dans le revêtement présentent une taille de particules primaires qui est entre 2,5 et 50 % du diamètre des plus grandes particules de polymère fluoré présentes selon la plus grande fraction pondérale, et au moins 10 % en poids de l'ensemble du pigment contenu dans le revêtement présentent une taille de particules primaires dont le diamètre correspond à un à cinq fois le diamètre des plus grandes particules de polymère fluoré présentes selon la plus grande fraction pondérale.

2. Objet selon la revendication 1, **caractérisé en ce que** son revêtement contient au moins un pigment inorganique.

3. Objet selon la revendication 1 ou 2, **caractérisé en ce que** son revêtement contient un pigment inorganique présentant au moins deux tailles différentes de particules primaires.

4. Objet selon l'une des revendications 1 à 3, **caractérisé en ce que** son revêtement contient comme pigment du noir de carbone, du dioxyde de silicium, du dioxyde de titane ou un oxyde mixte de cobalt-aluminium de type spinelle, du phosphate de cobalt, ZnFe₂O₄, un oxyde mixte (Fe₂Mn)₂O₃, Cu(Cr,Fe)₂O₄, Cr₂O₃, Fe₂O₃, FeO, du silicate d'aluminium, de l'oxyde d'aluminium, du talc, BaSO₄ ou des matières de charge céramiques.

5. Objet selon l'une des revendications 1 à 4, **caractérisé en ce qu'**au moins 10 % en poids de l'ensemble du pigment contenu dans le revêtement présentent des particules primaires dont la taille se trouve dans la gamme de 5 à 42 % du diamètre des plus grandes particules de polymère fluoré présentes selon la plus grande fraction pondérale.

6. Objet selon l'une des revendications 1 à 5, **caractérisé en ce que** respectivement au moins 20, en particulier respectivement au moins 30 % en poids de l'ensemble du pigment contenu dans le revêtement présentent des particules primaires dont la taille se trouve d'une part dans la gamme de 2,5 à 50 % et d'autre part dans la gamme de un à cinq fois le diamètre des plus grandes particules de polymère fluoré présentes selon la plus grande fraction pondérale.

7. Objet selon l'une des revendications 1 à 6, **caractérisé en ce que** sur l'ensemble du pigment contenu dans le revêtement, respectivement au moins 5 % en poids des particules primaires ont une taille comprise dans la gamme de 39 à 42 %, 20 à 24 %, 9 à 13 % et 5 à 8 % du diamètre des plus grandes particules de polymère fluoré présentes selon la plus grande fraction pondérale.

8. Objet selon l'une des revendications 1 à 7, **caractérisé en ce que** le polymère fluoré se compose d'un mélange d'au moins deux répartitions de tailles de particules différentes (bimodales).

9. Objet selon l'une des revendications 1 à 8, **caractérisé en ce que** le polymère fluoré se compose d'un mélange d'au moins un polymère fluoré ne pouvant être mis en forme à partir de la masse fondue et d'au moins un polymère fluoré thermoplastique.

10. Objet selon la revendication 9, **caractérisé en ce que** le mélange de polymères fluorés se compose jusqu'à 18 % en poids du polymère fluoré thermoplastique, dont le diamètre moyen des particules primaires représente jusqu'à 42 % du diamètre moyen des particules primaires du polymère fluoré ne pouvant être mis en forme à partir de la masse fondue.

11. Objet selon l'une des revendications 9 ou 10, **caractérisé en ce que** le polymère fluoré ne pouvant être mis en forme à partir de la masse fondue est un homopolymère de tétrafluoroéthylène ou un polytétrafluoro-éthylène modifié par un hexafluoropropylène ou un perfluoroalkyléther.

12. Objet selon l'une des revendications 9 à 11, **caractérisé en ce que** le polymère fluoré ne pouvant être mis en forme à partir de la masse fondue se compose de particules qualitativement ou quantitativement non homogènes.

13. Objet selon l'une des revendications 9 à 11, **caractérisé en ce que** le polymère fluoré thermoplastique est un copolymère de vinyléther de perfluoroalkyle et de tétrafluoroéthylène et/ou d'hexafluoropropylène et de tétrafluoroéthylène.

14. Procédé de fabrication d'un objet composé au moins en partie de métal, de céramique, d'émail ou de verre et comportant un revêtement au moins monocouche, recouvrant au moins une partie de l'objet, par revêtement d'au moins une partie de l'objet avec au moins une dispersion aqueuse de pigment inorganique et/ou organique, de polymère fluoré et d'au moins une résine liante du type des polyamidimides, des polyimides, des polyétherimides, des polyéthersulfones, des sulfures de polyphénylène, des polyéthercétones, des résines de silicone ou d'un mélange d'au moins deux de ceux-ci, le rapport pondéral entre l'ensemble de la résine liante et l'ensemble du polymère fluoré dans la couche amenée en contact direct avec la surface de l'objet étant compris entre 1,5:1 et 1:3, par séchage du revêtement humide et chauffage, **caractérisé en ce que**, en une ou plusieurs opérations consécutives, on applique sur l'objet des dispersions aqueuses préparées de façon telle que le revêtement total, sur la base de l'ensemble du polymère fluoré contenu, contienne 0,05 à 25 % en poids de pigment inorganique et/ou de pigment organique différent de la résine liante et du polymère fluoré, où au moins 10 % en poids de l'ensemble du pigment contenu dans le revêtement présentent une taille de particules primaires qui est comprise entre 2,5 et 50 % du diamètre des plus grandes particules de polymère fluoré présentes selon la plus grande fraction pondérale, et au moins 10 % en poids de l'ensemble du pigment contenu dans le revêtement présentent une taille de particules primaires dont le diamètre correspond à un à cinq fois le diamètre des plus grandes particules de polymère fluoré présentes selon la plus grande fraction pondérale.

15. Procédé selon la revendication 14, **caractérisé en ce que** l'on applique un revêtement en deux couches, sans sécher la couche de base avant l'application de la couche de recouvrement, et que l'on sèche à la fin de l'application.

16. Procédé selon la revendication 14, **caractérisé en ce que** l'on applique un revêtement en trois couches et que l'on sèche à cet égard brièvement la couche de base, puis soit qu'on ne sèche pas du tout la couche intermédiaire, soit qu'on la sèche seulement brièvement.

17. Procédé selon la revendication 13 à 16, **caractérisé en ce que** l'on utilise un objet dont la surface à revêtir possède une rugosité de surface moyenne inférieure à 5 µm et est exempte d'impuretés réduisant l'adhérence.

18. Procédé selon la revendication 13 à 17, **caractérisé en ce que** l'on revêt avec une dispersion aqueuse qui contient 4,0 à 18,0 % en poids de résine liante, 0,2 à 4,0 % en poids d'agent antimousse, 0,5 à 7,0 % en poids d'agent d'écoulement, 0,6 à 2,0 % en poids de noir de carbone, 0,4 à 2,5 % en poids de SiO₂, 0 à 5,2 % en poids d'agent d'homogénéisation, modifiant la viscosité, 2,7 à 17,5 % en poids de polymère fluoré, 1,8 à 8,0 % en poids de pigment, et le reste d'eau.

19. Procédé selon la revendication 13 à 18, **caractérisé en ce que** l'on revêt avec une dispersion aqueuse qui contient 0 à 10 % en poids de résine liante, 0,2 à 4,0 % en poids d'agent antimousse, 0,5 à 7,0 % en poids d'agent d'écoulement, 0,1 à 1,2 % en poids de noir de carbone, 0 à 0,8 % en poids de SiO₂, 0,2 à 5,5 % en poids d'agent d'homogénéisation, modifiant la viscosité, 0,05 à 4,8 % en poids de pigment, 0,1 à 1,4 % en poids de mica, 0 à 5,5 % en poids d'auxiliaire de frittage acrylique, 25,0 à 45,0 % en poids de polymère fluoré, et le reste d'eau.

20. Procédé selon la revendication 13 à 19, **caractérisé en ce que** l'on revêt avec une dispersion aqueuse qui contient 0,2 à 4,0 % en poids d'agent antimousse, 0,4 à 7,2 % en poids d'agent d'écoulement, 0,1 à 1,0 % en poids de noir de carbone, 0 à 0,9 % en poids de SiO₂, 0,2 à 5,5 % en poids d'agent d'homogénéisation, modifiant la viscosité, 0 à 5,5 % en poids d'auxiliaire de frittage acrylique, 0,05 à 1,5 % en poids de pigment, 0 à 1,6 % en poids de mica, 30,0 à 45,0 % en poids de polymère fluoré, et le reste d'eau.

21. Utilisation d'un objet selon l'une des revendications 1 à 13 en tant qu'appareil pour cuire, rôtir ou frire.

22. Matériau de revêtement de pigment inorganique et/ou organique, de polymère fluoré et d'au moins une résine liante du type des polyamidimides, des polyimides, des polyétherimides, des polyéthersulfones, des sulfures de polyphénylène, des polyéthercétones, des résines de silicone et des mélanges d'au moins deux de ceux-ci, **caractérisé en ce qu'**il présente, sur la base de l'ensemble du polymère fluoré contenu, 0,05 à 25 % en poids de pigment inorganique et/ou de pigment organique différent de la résine liante et du polymère fluoré, où au moins 10 % en poids de l'ensemble du pigment contenu dans le revêtement présentent une taille de particules primaires qui est comprise entre 2,5 et 50 % du diamètre des plus grandes particules de polymère fluoré présentes selon la plus grande fraction pondérale, et au moins 10 % en poids de l'ensemble du pigment contenu dans le revêtement présentent une taille de particules primaires dont le diamètre correspond à un à cinq fois le diamètre des plus grandes particules de polymère fluoré présentes selon la plus grande fraction pondérale.

23. Matériau de revêtement selon la revendication 22, **caractérisé en ce qu'**il contient 4,0 à 18,0 % en poids de résine liante, 0,2 à 4,0 % en poids d'agent antimousse, 0,5 à 7,0 % en poids d'agent d'écoulement, 0,6 à 2,0 % en poids de noir de carbone, 0,4 à 2,5 % en poids de SiO₂, 0 à 5,2 % en poids d'agent d'homogénéisation, modifiant la viscosité, 2,7 à 17,5 % en poids de polymère fluoré, 1,8 à 8,0 % en poids de pigment et le reste d'eau.

24. Matériau de revêtement selon la revendication 22, **caractérisé en ce qu'**il contient 0 à 10 % en poids de résine liante, 2 à 4,0 % en poids d'agent antimousse, 0,5 à 7,0 % en poids d'agent d'écoulement, 0,1 à 1,2 % en poids de noir de carbone, 0 à 5,8 % en poids de SiO₂, 0,2 à 5,5 % en poids d'agent d'homogénéisation, modifiant la viscosité, 0,05 à 4,8 % en poids de pigment, 0,1 à 1,4 % en poids de mica, 0 à 5,5 % en poids d'auxiliaire de frittage acrylique, 25,0 à 45,0 % en poids de polymère fluoré, et le reste d'eau.

25. Matériau de revêtement selon la revendication 22, **caractérisé en ce qu'**il contient 0,2 à 4,0 % en poids d'agent antimousse, 0,4 à 7,2 % en poids d'agent d'écoulement, 0,1 à 1,0 % en poids de noir de carbone, 0 à 0,9 % en poids de SiO₂, 0,2 à 5,5 % en poids d'agent d'homogénéisation, modifiant la viscosité, 0 à 5,5 % en poids d'auxiliaire de frittage acrylique, 0,05 à 1,5 % en poids de pigment, 0 à 1,6 % en poids de mica, 30,0 à 45,0 % en poids de polymère fluoré et le reste d'eau.

26. Matériau de revêtement selon l'une des revendications 22 à 25, **caractérisé en ce qu'**il présente un rapport pondéral entre résine liante et polymère fluoré compris au total dans la gamme de 1,5:1 à 1:3.

27. Matériau de revêtement selon l'une des revendications 22 à 26, **caractérisé en ce qu'**il contient un pigment inorganique présentant au moins deux tailles différentes de particules primaires.

28. Matériau de revêtement selon l'une des revendications 22 à 27, **caractérisé en ce qu'**il contient comme pigment du noir de carbone, du dioxyde de silicium, du dioxyde de titane ou un oxyde mixte de cobalt-aluminium de type spinelle, du phosphate de cobalt, ZnFe₂O₄, un oxyde mixte (Fe₂Mn)₂O₃, Cu(Cr,Fe)₂O₄, Cr₂O₃, Fe₂O₃, FeO, du silicate d'aluminium, de l'oxyde d'aluminium, du talc, BaSO₄ ou des matières de charge céramiques.

29. Matériau de revêtement selon l'une des revendications 22 à 28, **caractérisé en ce qu'**au moins 10 % en poids de l'ensemble du pigment contenu présentent une taille de particules primaires qui se trouve dans la gamme de 5 à 42 % du diamètre des plus grandes particules de polymère fluoré présentes selon la plus grande fraction pondérale.

30. Matériau de revêtement selon l'une des revendications 22 à 29, **caractérisé en ce que** respectivement au moins 20, en particulier respectivement au moins 30 % de l'ensemble du pigment contenu dans le revêtement présentent une taille de particules primaires qui se trouve d'une part dans la gamme de 2,5 à 50 % et d'autre part dans la gamme de un à cinq fois le diamètre des plus grandes particules de polymère fluoré présentes selon la plus grande fraction pondérale.

31. Matériau de revêtement selon l'une des revendications 22 à 30, **caractérisé en ce que**, sur l'ensemble du pigment contenu dans le revêtement, respectivement au moins 5 % en poids des particules primaires ont une taille comprise dans la gamme de 39 à 42 %, 20 à 24 %, 9 à 13 % et 5 à 8 % du diamètre des plus grandes particules de polymère fluoré présentes selon la plus grande fraction pondérale.

32. Matériau de revêtement selon l'une des revendications 22 à 31, **caractérisé en ce que** le polymère fluoré se compose d'un mélange d'au moins deux répartitions différentes de tailles de particules (bimodales).

33. Matériau de revêtement selon l'une des revendications 22 à 32, **caractérisé en ce que** le polymère fluoré se compose d'un mélange d'au moins un polymère fluoré ne pouvant être mis en oeuvre à partir de la masse fondue et d'au moins un polymère fluoré thermoplastique.

34. Matériau de revêtement selon l'une des revendications 22 à 33, **caractérisé en ce que** le polymère fluoré est bimodal ou multimodal, avec au moins deux répartitions différentes de tailles de particules.
